# EUROPÄISCHE PATENTSCHRIFT

(11) **EP 3 768 790 B1**
(45) Veröffentlichungstag und Bekanntmachung des Hinweises auf die Patenterteilung: **11.10.2023**
(21) Anmeldenummer: 19708812.3
(22) Anmeldetag: 27.02.2019
(51) Int. Cl.: C08K 5/00, C09J 133/00, D06N 3/00, D01F 1/04, D01F 6/04, D01F 6/60, D01F 6/62, C09J 7/21

(54) **KLEBEBAND**
ADHESIVE TAPE
RUBAN ADHÉSIF

(30) Priorität: 23.03.2018 DE 202018101649 U
(43) Veröffentlichungstag der Anmeldung: 27.01.2021
(73) Patentinhaber: Certoplast Technische Klebebänder GmbH, 42285 Wuppertal (DE)
(72) Erfinder: LEERMANN, Timo, 42369 Wuppertal (DE)
(74) Vertreter: Andrejewski - Honke Patent- und Rechtsanwälte Partnerschaft mbB
(86) Internationale Anmeldenummer: PCT/EP2019/054881
(87) Internationale Veröffentlichungsnummer: WO 2019/179738

(56) Entgegenhaltungen:
- DE-A1- 2 732 586
- DE-A1-102011 079 114
- DE-A1-102013 223 504
- DE-U1-202017 107 156
- JUN CHOI ET AL: "Synthesis and characterization of some perylene dyes for dye-based LCD color filters", DYES AND PIGMENTS, ELSEVIER APPLIED SCIENCE PUBLISHERS BARKING, GB, vol. 90, no. 1, 11 November 2010 (2010-11-11), pages 82-88, XP028138270, ISSN: 0143-7208, DOI: 10.1016/J.DYEPIG.2010.11.006 [retrieved on 2010-11-19]
- Anonymous: "Perylene pigment", , 19 August 2022 (2022-08-19), pages 1-3, XP055953019, Retrieved from the Internet: URL:https://www.ranbar.cn/en/technology/14 1.html [retrieved on 2022-08-19]
- Hangzhou Epsilon ET AL: "Perylene Red 2g TDS", , 14 November 2017 (2017-11-14), pages 1-1, XP055953023, Retrieved from the Internet: URL:http://www.epsilonpigments.com/organic -pigments/Pigment-Red-179-ECR17901.html [retrieved on 2022-08-19]
- Anonymous: "Horiba Scientific, A Guidebook to Particle Size Analysis", , 1 January 2012 (2012-01-01), pages 1-32, XP055060732, Irvine, CA 92618, USA Retrieved from the Internet: URL:http://www.horiba.com/fileadmin/upload s/Scientific/eMag/PSA/Guidebook/pdf/PSA_Gu idebook.pdf [retrieved on 2013-04-23]

## Beschreibung

Die Erfindung betrifft die Verwendung eines Wickelband zur Ummantelung von Kabeln in Automobilen, wobei das Wickelband mit einem textilen Träger sowie mindestens einer ein- oder beidseitig auf den Träger aufgebrachten Klebeschicht ausgerüstet ist und wobei der Träger zumindest teilweise aus Polyester-, Polypropylen-, Polyethylen- oder Polyamidfasern besteht und durch einen Farbstoff eingefärbt ist.

Textile Träger bei Klebebändern werden seit Jahren eingefärbt, zunächst unter Rückgriff auf anorganische Pigmente auf beispielsweise Rußbasis. Derartige Pigmente werden beispielsweise in ein Extrudat eingebracht und lassen sich im Zuge der Herstellung von Filamenten oder auch Filamentgeweben einsetzen, wie dies in der WO 03/033611 A1 im Detail beschrieben wird.

Heutzutage kommt es jedoch zunehmend darauf an, mit der Einfärbung eine Schutzfunktion oder auch Warnfunktion des entsprechend ausgerüsteten Klebebandes zu koppeln. Tatsächlich werden derartige Klebebänder und insbesondere Wickelbänder in der Regel eingesetzt, um Kabelbäume herzustellen. Dazu werden die Klebebänder zum Bündeln der zusammenzufassenden elektrischen Leitungen vor dem Einbau oder in montiertem Zustand typischerweise spiral- oder wendelförmig um das Leitungsbündel herumgewickelt. Grundsätzlich sind auch Längsumhüllungen auf diese Weise realisierbar.

Die Warn- oder Hinweisfunktion des fraglichen Klebebandes oder Wickelbandes wird beispielsweise dann benötigt und ist erforderlich, wenn Kabel- oder Kabelbündel zusammengefasst werden sollen, an denen elektrische Spannungen größer als 60 Volt anliegen. Das ist typischerweise bei Hybrid- und Elektroautos der Fall. Derartige Kabelbündel müssen durch einen orangefarbenen Farbton gekennzeichnet werden. Hier wurde im Jahr 2010 der Farbton RAL 2003 (Pastellorange) als Standard-Farbton vorgegeben.

Im Stand der Technik sind bereits verschiedene Ansätze bekannt, Klebebänder und insbesondere Wickelbänder zur Ummantelung von Kabeln in Automobilen mit dem vorgenannten orangen Farbton auszurüsten. So arbeitet die gattungsbildende Lehre nach der DE 10 2011 079 114 A1 mit organischen Farbstoffen, die sich aus einer Mischung aus gelben und roten Farbstoffen bzw. Pigmenten zusammensetzt. Der gelbe Farbstoff basiert auf Anthrachinon. Für den roten Farbstoff kommt eine Azoverbindung zum Einsatz. Alternativ hierzu kann es sich bei dem roten Farbstoff aber auch um eine Mischung von Anthrachinon-Verbindungen und Azoverbindungen handeln.

Die Färbung der Fasern, Filamente oder Fäden des textilen Trägers bei der Lehre nach der DE 10 2011 079 114 A1 erfolgt durch eine Dispersionsfärbung. Dabei werden in Wasser schwerlösliche synthetische Farbmittel eingesetzt. Hierzu muss das Farbmittel feinst zermahlen und in ein erwärmtes Färbebad gegeben werden.

Wie üblich bezeichnet der Begriff "Farbstoff" im Rahmen der vorliegenden Anmeldung und ausweislich der Erläuterungen bei "Römpp Chemielexikon, 9. Auflage, 1993, Seite 1301" einen Sammelbegriff oder eine Sammelbezeichnung für in Lösungsmitteln und/oder Bindemitteln lösliche Farbmittel. Den Farbstoffen stehen also die unlöslichen Pigmente gegenüber, die den Farbstoffen in Anzahl, Strukturvielfalt und meist auch an Leuchtkraft unterlegen sind.

Folgerichtig werden als Pigmente und entsprechend den Erläuterungen bei "Römpp Chemielexikon 9. Auflage, 1995, Seite 3439" nachfolgend und im Anwendungsmedium praktisch unlösliche anorganische oder organische bunte oder unbunte Farbmittel verstanden. Dementsprechend ist im Folgenden zwischen Farbstoffen einerseits und Pigmenten andererseits entsprechend diesen Definitionen zu unterscheiden.

Bei der bekannten Lehre nach der DE 10 2011 079 114 A1 kann es aufgrund von Wärmeeinwirkung und/oder durch Alterungserscheinungen nach wie vor zu einer Entfärbung bzw. zu einem Verblassen der Einfärbung des Klebebandes kommen. Das ist insbesondere auf langen Zeitskalen problematisch, weil hierdurch in Verbindung mit unvermeidlichen Verschmutzungen der Warneffekt verloren geht.

Aus diesem Grund schlägt die DE 20 2017 107 156 U1 der Anmelderin ein Klebeband vor, bei dem als Farbstoff ganz oder teilweise anorganische mineralische Pigmente eingesetzt werden. Dadurch wird insgesamt eine Temperaturstabilität erreicht, die in der Regel weit über 150 °C für das Klebeband unter Berücksichtigung der hiermit verbundenen Temperaturklasse T4 entsprechend der Norm LV 312 ("Schutzsysteme für Leitungssätze in Kraftfahrzeugen, Klebebändern; Prüfrichtlinie" (10/2009)) über eine Dauer von 3.000 Stunden beträgt.

Einen anderen Ansatz verfolgt die DE 10 2015 121 562 A1. Hier wird mit einem Farbmittel auf Basis einer Diazoverbindung gearbeitet. Hierdurch versucht man erneut eine besondere Temperaturbeständigkeit zu erreichen, die vorliegend mindestens die Temperaturklasse T4 abdeckt. Das alles soll unter anderem durch den Verzicht auf Anthrachinon-Verbindungen erreicht werden, weil Anthrachinon als vermeintlich gesundheitsgefährdender Stoff eingestuft wird. Etwaige Belege hierfür werden jedoch nicht genannt.

Der Erfindung liegt das technische Problem zugrunde, eine derartige Verwendung eines Wickelbandes so weiter zu entwickeln, dass das Wickelband besonders temperaturstabil und zugleich einfach und kostengünstig aufgebaut ist.

Zur Lösung dieser technischen Problemstellung ist Gegenstand der Erfindung die Verwendung nach Anspruch 1.

Die Erfindung greift also für die Realisierung des organischen Farbstoffes zunächst einmal auf gelbe Pigmente zurück, die nach wie vor auf Anthrachinon basieren, wie dies beispielsweise durch die DE 10 2011 079 114 A1 bekannt geworden ist. Im Gegensatz dazu kommt jedoch als roter Farbstoff bzw. rotes Pigment nicht eine Azoverbindung bzw. die Mischung einer Anthrachinon-Verbindung und einer Azoverbindung zum Einsatz. Vielmehr greift die vorliegende Erfindung bewusst auf ein Perylen zurück, also einen speziellen polyzyklischen aromatischen Kohlenwasserstoff, der beispielsweise natürlich in Torf und rezenten Sedimenten am Grund von Gewässern, aber auch in Rohöl vorkommt. Außerdem kann Perylen durch Erhitzen von Naphthalin mit Aluminiumchlorid oder anderen Lewis-Säuren hergestellt werden. Darüber hinaus kennt man für die Herstellung von Perylen die Decarboxylierung von Perylentetracarbonsäuredianhydrid (PTCDA). Das wird in der Regel mit Hilfe von Mikrowellen in Anwesenheit von Kupfer als Katalysator durchgeführt.

Perylen liegt als Feststoff vor und zeichnet sich durch gelbe sowie glänzende Plättchen aus, die über eine äußerst hohe Schmelztemperatur von mehr als 270 °C verfügen. Da Perylen darüber hinaus ein organischer Halbleiter ist, steht es ebenso wie seine Derivate als Pigment zunehmend und zu einem fallenden Rohstoffpreis zur Verfügung. Das lässt sich darauf zurückführen, dass Perylen als Reinststoff in organischen Bauelementen wie Transistoren, organischen Leuchtdioden (OLED) oder organischen Solarzellen eine wachsende Verbreitung findet.

Auf diese Weise wird erfindungsgemäß ein Klebeband und insbesondere Wickelband zur Ummantelung von Kabeln in Automobilen zur Verfügung gestellt, welches sich einfach und kostengünstig herstellen lässt. Hinzu kommt, dass das fragliche Klebeband äußerst temperaturstabil ausgelegt ist und Entfärbungen nicht oder praktisch nicht beobachtet werden. Tatsächlich erfüllt das erfindungsgemäße Klebeband wenigstens die Temperaturklasse T3 (125 °C) und insbesondere sogar die Temperaturklasse T4 (150°C) entsprechend der zuvor bereits in Bezug genommenen Norm LV 312. Die Temperaturklasse T3 korrespondiert dazu, dass das fragliche Klebeband eine Beständigkeit bis zu Temperaturen von 125 °C aufweisen muss. Zur Erfüllung der Temperaturklasse T4 wird eine Beständigkeit bis zu 150 °C gefordert. Für die Temperaturklasse T5 sogar eine solche bis zu 175 °C. Das heißt, das umwickelte Kabel und mit ihm das Klebeband muss dieser Temperatur über eine Dauer von 3.000 Stunden standhalten und darf hierbei keine signifikante Entfärbung aufweisen. Details hierzu werden in der fraglichen Norm bzw. in der zuvor bereits in Bezug genommenen DE 10 2015 121 562 A1 beschrieben.

Der gelbe Farbstoff basiert erfindungsgemäß auf gelben Pigmenten auf Basis von Anthrachinon. Bei Anthrachinon bzw. entsprechenden Pigmenten handelt es sich um solche, die sich von der Grundstruktur des Anthrachinons ableiten. Solche Anthrachinon-Pigmente stehen ebenso wie Perylen-Pigmente vielfältig und zu geringen Kosten zur Verfügung, sind folglich für den beschriebenen erfindungsgemäßen Einsatzzweck besonders geeignet. Hinzu kommt, dass sich hiermit besonders hohe Temperaturstabilitäten wie beschrieben erreichen lassen.

Um die bereits angesprochene Temperaturklasse T3 und insbesondere sogar T4 für das Klebeband darstellen zu können, wird im Allgemeinen auf eine spezielle Klebeschicht zurückgegriffen. Hier hat es sich als günstig erwiesen, wenn die Klebeschicht ganz oder teilweise aus einer lösungsmittelfreien Acrylat-Hotmelt-Masse besteht. Grundsätzlich sind natürlich auch andere Klebebeschichtungen denkbar. Um jedoch die geforderte Temperaturklasse von mindestens T4 zu erreichen, wird im Allgemeinen auf die Acrylat-Hotmelt-Masse zurückgegriffen.

Im Übrigen wird im erfindungsgemäß so gearbeitet, dass einzelne oder sämtliche Fäden des Trägers spinndüsengefärbt sind. Dadurch kann unter zusätzlichem Rückgriff auf eine Klebemasse auf Acrylat-Basis insgesamt ein Klebeband mit einem gefärbten Träger für die Ummantelung von Kabelbündeln bereitgestellt werden, der wenigstens die zuvor bereits angesprochene Temperaturklasse T3 und insbesondere sogar die Temperaturklasse T4 erfüllt. Hierzu trägt auch und insbesondere die Tatsache bei, dass die einzelnen oder sämtlichen Fäden spinndüsengefärbt sind.

Eine solche Spinndüsenfärbung zeichnet sich dadurch aus, dass die farblichen Pigmente bzw. die Mischung aus den gelben und roten Pigmenten mit einem Granulat aus beispielsweise Polyester gemischt werden. Dabei verfügen die Pigmente erfindungsgemäß über eine Korngröße von weniger als 0,5 mm. Außerdem hat es sich in diesem Zusammenhang als günstig erwiesen, wenn die Pigmente im Extrudat bei der Spinndüsenfärbung in einer Konzentration von 0,2 bis 3,0 Masseprozent bezogen auf die polymere Spinnmasse vorhanden sind.

Grundsätzlich können als Fäden für den textilen Träger nicht nur Spinnfäden im Zuge der bereits beschriebenen Spinndüsenfärbung hergestellt und weiter verarbeitet werden. Tatsächlich lassen sich die Spinnfasern zu Garnen oder auch zu Stapelfasern weiterverarbeiten. Als geeignete Träger können sowohl Gewebe als auch Vliese einzeln oder in Kombination realisiert werden. Das Flächengewicht des Trägers liegt in der Regel bei 20 g/m² bis hin zu 500 g/m². Für die Klebemasse wird im Allgemeinen ein Auftragsgewicht von 20 g/m² bis 200 g/m² empfohlen. Die Klebeschicht kann vollflächig oder streifenförmig auf den Träger aufgebracht sein.

Die Herstellung der Ummantelung mit Hilfe des erfindungsgemäßen Klebebandes kann dadurch erfolgen, dass das fragliche Klebeband als Wickelband spiral- oder wendelförmig um die zu ummantelnden elektrischen Leitungen herumgeführt wird. Es ist aber auch möglich, dass mit Hilfe des erfindungsgemäßen Klebebandes bzw. Wickelbandes eine Längsumhüllung realisiert wird, die als Längsumschlag in Längsrichtung um die zu ummantelnden Kabel herumgeschlagen wird.

Der Träger besteht dabei ganz oder teilweise aus Polyester-, Polypropylen-, Polyethylen- oder Polyamidfasern. Die Fasern können zu Spinnfäden oder auch Stapelfasern weiterverarbeitet werden. Dadurch lassen sich die bereits angesprochenen Träger realisieren, die als Gewebe, Vlies, einzeln oder in Kombinationen ausgebildet sind. In Verbindung mit der bevorzugt eingesetzten Spinndüsenfärbung der Fasern und unter Rückgriff auf die speziellen erfindungsgemäßen Pigmente wird insgesamt ein besonders temperaturstabiles Klebeband zur Verfügung gestellt.

Sofern zusätzlich noch Fasern auf Polyester- oder Polyamid-Basis zum Einsatz kommen, werden darüber hinaus hohe Abriebbeständigkeiten beobachtet, die beispielsweise bei Realisierung eines Gewebes als Träger zu Abriebbeständigkeiten korrespondieren oder korrespondieren können, die entsprechend der zuvor bereits angesprochenen Norm LV 312 zu einem mittleren Abriebschutz entsprechend der Klasse C oder auch einem hohen Abriebschutz nach der Klasse D korrespondieren. Durch die beiden erfindungsgemäß eingesetzten Pigmente lässt sich wunschgemäß der orange Farbton entsprechend RAL 2003 (Pastellorange) realisieren. Hierin sind die wesentlichen Vorteile zu sehen.

## Patentansprüche

1. Verwendung eines Wickelbandes zur Ummantelung von Kabeln in Automobilen, wobei
das Wickelband mit einem textilen Träger sowie mindestens einer ein- oder beidseitig auf den Träger aufgebrachten Klebeschicht ausgerüstet ist, wobei ferner
der Träger zumindest teilweise aus Polyester-, Polypropylen-, Polyethylen- oder Polyamidfasern besteht und durch einen organischen Farbstoff eingefärbt ist, der sich aus gelben und roten Pigmenten zusammensetzt, wobei weiter
die gelben Pigmente auf Anthrachinon basieren sowie als rote Pigmente solche auf Basis von Perylen eingesetzt werden, und wobei
einzelne oder sämtliche Fäden des Trägers spinndüsengefärbt sind, in dem die farblichen Pigmente mit einem Granulat gemischt werden.

2. Verwendung nach Anspruch 1, **dadurch gekennzeichnet, dass** der Träger als Gewebe, Vlies, einzeln oder in Kombinationen ausgebildet ist.

3. Verwendung nach Anspruch 1 oder 2, **dadurch gekennzeichnet, dass** der Träger ein Flächengewicht von bis zu 500 g/m² und die Klebemasse ein Auftragsgewicht von 20 bis 200 g/m² aufweist.

4. Verwendung nach einem der Ansprüche 1 bis 3, **dadurch gekennzeichnet, dass** die Klebeschicht ganz oder teilweise aus einer lösungsmittelfreien Acrylat-Hotmelt-Masse besteht.

5. Verwendung nach einem der Ansprüche 1 bis 4, **dadurch gekennzeichnet, dass** es wenigstens die Temperaturklasse T3 insbesondere sogar die Temperaturklasse T4 entsprechend der Norm LV 312 erfüllt.

## Claims

1. Use of a wrapping tape for surrounding cables in automobiles, wherein
the wrapping tape is equipped with a textile support and at least one adhesive layer applied to one or both sides of the support, wherein further
that at least a part of the support consists of polyester fibres, polypropylene fibres, polyethylene fibres or polyamide fibres and is coloured with an organic dye composed of yellow and red pigments, wherein further
the yellow pigments are based on anthraquinone, and pigments based on perylene are used as red pigments, and wherein
individual or all fibres of the support undergo spinneret dyeing, in which the coloured pigments are mixed with a granulate.

2. Use according to Claim 1, **characterized in that** the support is embodied as a woven, nonwoven, separately or in combinations thereof.

3. Use according to Claim 1 or 2, **characterized in that** the support has a weight per unit area of up to 500 g/m², and the adhesive mass has an application weight from 20 to 200 g/m².

4. Use according to any one of Claims 1 to 3, **characterized in that** the adhesive layer consists partly or entirely of an acrylic hotmelt adhesive.

5. Use according to any one of Claims 1 to 4, **characterized in that** it satisfies the requirements of temperature class T3, in particular even temperature class T4 of standard LV 312.

## Revendications

1. Utilisation d'une bande d'enroulement pour envelopper des câbles dans le secteur automobile, sachant que
la bande d'enroulement est dotée d'un support textile ainsi que d'au moins une couche adhésive appliquée sur un ou deux côtés sur le support, sachant en plus que
le support est composé au moins en partie de fibres de polyester, de polypropylène, de polyéthylène ou de polyamide et est teinté par un colorant organique, qui est composé de pigments jaunes et rouges, sachant en plus que
les pigments jaunes sont à base d'anthraquinone et que les pigments rouges sont utilisés comme tels à base de pérylène et sachant que
chaque fil ou tous les fils du support sont teintés à la filière, les pigments de couleur étant mélangés à un granulat.

2. Utilisation selon la revendication 1, **caractérisée en ce que** le support est constitué sous la forme d'un tissu, d'un non-tissé, individuellement ou en combinaison.

3. Utilisation selon la revendication 1 ou 2, **caractérisée en ce que** le support comporte un grammage allant jusqu'à 500 g/m² et la masse adhésive un poids d'application allant jusqu'à 20 à 200 g/m².

4. Utilisation selon l'une quelconque des revendications 1 à 3, **caractérisée en ce que** la couche adhésive est composée entièrement ou en partie d'une masse acrylate-matière thermofusible sans solvant.

5. Utilisation selon l'une quelconque des revendications 1 à 4, **caractérisée en ce qu'**au moins la catégorie de températures T3, en particulier même la catégorie de températures T4, satisfait à la norme LV312.
